# EUROPÄISCHE PATENTSCHRIFT

(11) **EP 3 359 347 B1**
(45) Veröffentlichungstag und Bekanntmachung des Hinweises auf die Patenterteilung: **29.05.2024**
(21) Anmeldenummer: 16775253.4
(22) Anmeldetag: 04.10.2016
(51) Int. Cl.: B25J 9/16, B25J 9/00, G05B 19/423, B25J 17/02

(54) **ROBOTERARM MIT EINGABEELEMENTEN**
ROBOT ARM WITH INPUT ELEMENTS
BRAS DE ROBOT COMPRENANT DES ÉLÉMENTS D'ENTRÉE

(30) Priorität: 08.10.2015 DE 102015117211
(43) Veröffentlichungstag der Anmeldung: 15.08.2018
(73) Patentinhaber: Kastanienbaum GmbH, 80538 München (DE)
(72) Erfinder: HADDADIN, Sami, 30173 Hannover (DE)
(74) Vertreter: Rösler Rasch van der Heide & Partner
(86) Internationale Anmeldenummer: PCT/EP2016/073611
(87) Internationale Veröffentlichungsnummer: WO 2017/060209

(56) Entgegenhaltungen:
- EP-A1- 2 184 659
- WO-A1-2014/110682
- US-A1- 2012 130 541
- US-A1- 2013 338 830

## Beschreibung

Die Erfindung betrifft einen Roboterarm mit einer Anzahl N von Armgliedern Aₙ, die über eine Anzahl N aktorisch antreibbare Gelenkverbindungen GVₙ mit einem Roboterkörper verbindbar sind. Die Erfindung betrifft darüber hinaus einen Roboter mit einem ebensolchen Roboterarm.

Bei einer Zusammenarbeit von Mensch und Roboter ist insbesondere eine sogenannte Lernprogrammierung ("Teach-in" Verfahren) des Roboters bekannt. Hierbei ergreift der Mensch einen Roboterarm des Roboters, insbesondere am Endeffektor, und führt eine zu lernende Bewegung des Roboterarms aus. Dabei kompensiert der Roboter vorteilhaft die Trägheit und das Eigengewicht des Roboterarms. Die ausgeführte Bewegung des Roboterarms wird gespeichert und kann nachfolgend automatisch vom Roboter durchgeführt werden. Dies ermöglicht eine einfache und schnelle Programmierung des Roboters. Natürlich ist eine Nachbearbeitung bzw. Optimierung der ausgeführten und gespeicherten Bewegung des Roboterarms möglich.

Bei diesem "Teach-in" Verfahren muss der Roboterarm aus verschiedenen Positionen gegriffen und geführt werden. Weiterhin sind Bedienelemente und gegebenenfalls Anzeigeelemente am Roboter bzw. am Roboterarm erforderlich, um die Lernprogrammierung zu steuern bzw. Statusanzeigen oder sonstige Ausgaben zu ermöglichen. Dabei ist es wichtig, dass diese Bedienelemente bzw. Anzeigeelemente gut ergonomisch bedienbar bzw. einsehbar sind.

Aus der US 2012/0130541 A1 ist ein "Teach-in" Verfahren für einen Roboter bekannt. Der Roboter weist hierzu an einem Handgelenk eines Roboter Manipulators taktile Sensoren auf, mittels denen Eingaben erfolgen.

Aus der WO 2014/110682 A1 ist ein "Teach-in" Verfahren für einen Roboter bekannt. Der Roboter weist hierzu an einem Endeffektor einen Kraft/Drehmomentsensor auf, mittels dem Eingaben erfolgen.

Die Aufgabe der Erfindung ist es, einen Roboterarm anzugeben, der eine ergonomische Lernprogrammierung eines Roboters mit einem Roboterarm ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft einen Roboterarm, der eine Anzahl N von Armgliedern Aₙ aufweist, die über eine Anzahl N aktorisch antreibbare Gelenkverbindungen GVₙ mit einem Roboterkörper verbindbar sind, mit n= 1, 2, ..., N.

Der vorgeschlagene Roboterarm zeichnet sich dadurch aus, dass das distale Armglied A_{N} des Roboterarms an seinem proximalen Ende über die Gelenkverbindung GV_{N} mit dem Armglied A_{N-1} verbunden ist, das proximale Armglied A₁ des Roboterarms an seinem proximalen Ende über die Gelenkverbindung GV₁ mit dem Roboterkörper verbindbar ist, die Gelenkverbindung GV_{N} eine Drehung des Armglieds A_{N} um eine Drehachse D_{N} ermöglicht, das Armglied A_{N} des Roboterarms sich entlang einer Achse L1 erstreckt und die Achse L1 mit der Drehachse D_{N} einen Winkel von 50 bis 130° einschließt, das distale Ende des Armglieds A_{N} über eine aktorisch antreibbare Gelenkverbindung GV_{N+1} mit einem Effektor E verbindbar ist, wobei die Gelenkverbindung GV_{N+1} eine Drehung des Effektors E um eine Drehachse D_{N+1} ermöglicht, die Drehachsen D_{N} und D_{N+1} einen Winkel W1 im Bereich von 50 bis 130° einschließen und die Drehachse D_{N+1} und die Achse L1 einen Winkel W2 im Bereich von 50 bis 130° einschließen,

Der vorgeschlagene Roboter zeichnet sich erfindungsgemäß dadurch aus, dass das Armglied A_{N} einen damit (dem Armglied A_{N}) starr verbundenen griffartigen Fortsatz F1 aufweist, der sich konzentrisch zur Drehachse D_{N+1} erstreckt, ein freies Ende FE des Fortsatzes mit einem Rest RF1 des Fortsatzes F1 um die Drehachse D_{N+1} rotierbar fest verbunden ist oder das freie Ende FE des Fortsatzes mit dem Rest RF1 des Fortsatzes F1 in verschiedenen Ausrichtungen um die Drehachse D_{N+1} lösbar fest verbindbar ist, und das freie Ende FE Eingabeelemente EE zur manuellen Eingabe von Daten aufweist.

Die vorgeschlagene Anordnung und Ausführung der Eingabeelemente EE am freien Ende FE des Fortsatzes ermöglicht insbesondere eine gute ergonomische Bedienung, insbesondere bei einer Lernprogrammierung eines Roboters mit einem solchen Roboterarm. Die Eingabe von Informationen über die Eingabeelemente EE erfolgt vorteilhaft manuell, d.h. mittels Berührung bzw. manueller Bedienung der Eingabeelemente EE.

Vorteilhaft sind die Eingabeelemente EE am freien Ende FE zumindest teilweise konzentrisch um die Drehachse D_{N+1} angeordnet. Das heißt, dass zwei, drei, ... oder alle der Eingabeelemente EE konzentrisch um die Drehachse D_{N+1}, vorteilhaft mit einem identischen Radius zur Drehachse D_{N+1}, angeordnet sind. Wird der Fortsatz F1 mit einer Hand umgriffen, und werden die Eingabeelemente EE mit dem Daumen der Hand bedient, so sind die Eingabeelemente EE für den Daumen somit auch bei unterschiedlichen Ausrichtungen der Hand gleichbleibend gut erreich- bzw. bedienenbar.

Vorteilhaft ist ein Eingabeelement EE₀ der Eingabeelemente EE axial zur Drehachse D_{N+1} angeordnet. Dieses zentrale Eingabeelement EE₀ dient vorteilhaft zur Eingabe oder Steuerung aktuell primärer Parameter, beispielsweise zur Eingabe eines Startzeitpunktes und eines Endzeitpunktes einer Lernprogrammierung.

Vorteilhaft können die über die Eingabeelemente EE jeweils eingegebenen oder gesteuerten Parameter automatisch oder manuell abhängig von der jeweiligen Aufgabenstellung variabel zugeordnet bzw. ausgewählt werden.

Vorteilhaft ist der Fortsatz F1 derart ausgebildet, dass er von einer Hand eines Bedieners umgriffen werden kann, wobei ein Daumen der Hand auf dem freien Ende FE zur Bedienung der Eingabeelemente EE zu liegen kommt. Hierzu weist der Fortsatz F1 vorteilhaft eine Zylinderform oder eine ergonomische Griffform auf.

Vorteilhaft ist das freie Ende FE zur Bedienung der Eingabeelemente EE mit dem Daumen der Hand ergonomisch ausgebildet. Hierzu sind in einer Ausführungsform die Eingabeelemente EE auf einer Fläche angeordnet, die gegenüber einer Fläche senkrecht zur Drehachse D_{N+1} in einem Winkel von 5 bis 60° geneigt ist. Durch diese Neigung ist eine ergonomische Bedienung der Eingabeelemente EE möglich, wobei das distale Daumengelenk der bedienenden Hand insbesondere nicht beispielsweise um 90° abgewinkelt werden muss.

Vorteilhaft weisen die Eingabeelemente EE Leuchtelemente mit einer oder mehreren ansteuerbaren Lichtquellen auf. Die Lichtquelle/n sind vorteilhaft Leuchtdioden LEDs.

Die Eingabeelemente EE sind vorteilhaft als Taster und/oder Wipptaster und/oder Druckknöpfe und/oder Schalter und/oder Drehknöpfe und/oder Schieberegler ausgeführt. In einer weiteren vorteilhaften Ausführungsform sind die Eingabeelemente EE als Eingabefelder eines Touchpads (berührempfindliche Fläche) oder eines Touchscreens (berührempfindliches Display) ausgeführt.

In einer Weiterbildung des vorgeschlagenen Roboterarms ist das freie Ende FE des Fortsatzes F1 mit dem Rest RF1 des Fortsatzes F1 in verschiedenen Ausrichtungen um die Drehachse D_{N+1} lösbar fest verbindbar ist. (bspw. mittel Rast- oder Klippverbindungen). Das heißt, dass das freie Ende FE vom mit dem Roboterarm starr verbundenen Rest RF1 des Fortsatzes F1 lösbar ist, und in einer anderen, gegenüber der Drehachse D_{N+1} rotierten Lage wieder mit dem Rest RF1 des Fortsatzes F1 verwendbar ist. So können die Eingabeelemente EE in ihrer Ausrichtung relativ zur den Fortsatz F1 ergreifenden Hand jeweils optimal ausgerichtet werden. Allerdings erfordert diese Ausrichtung jeweils ein Lösen des freien Endes FE und ein erneutes Verbinden des freien Endes FE mit dem Rest RF1 des Fortsatzes F1 in einer neuen Winkelorientierung.

In einer besonders vorteilhaften Ausführungsform des Roboterarms ist das freie Ende FE des Fortsatzes F1 um die Drehachse D_{N+1} rotierbar fest mit dem Rest RF1 des Fortsatzes verbunden. In dieser Ausführungsform kann das freie Ende FE vorteilhaft frei (d.h. ohne Anschlag) um die Drehachse D_{N+1} rotiert werden. Das Lösen und erneute Verbinden des freien Endes FE, wie in der vorangehenden Weiterbildung ausgeführt, entfällt in dieser Ausführungsform.

Eine Weiterbildung zeichnet sich dadurch aus, dass zwischen dem freien Ende FE und dem Rest RF1 des Fortsatzes F1 eine mechanische und/oder elektrische und/oder eine magnetische Rastervorrichtung vorhanden ist, die ein Rotieren des freien Endes FE mit einer vorgegebenen Rasterung um die Drehachse D_{N+1} erlaubt. Dies verhindert insbesondere ein ungewolltes Verdrehen des freien Endes FE gegenüber dem Rest RF1 des Fortsatzes F1. Um von einer Rasterstellung in eine benachbarte Rasterstellung zu gelangen, ist es erforderlich, eine vorgegebene Kraft bzw. ein vorgegebenes Drehmoment auf das freie Ende FE aufzubringen. Vorteilhaft wird diese Kraft bzw. dieses Drehmoment derart gewählt, dass eine ergonomische Bedienung der Eingabeelemente bei unterschiedlichen Angriffsrichtungen der Hand am Fortsatz F1 möglich ist. Vorteilhaft lässt sich diese Kraft bzw. dieses Drehmoment variabel je nach Bedarf vorgeben.

Eine Weiterbildung zeichnet sich dadurch aus, dass an dem Armglied A_{N} eine Ausgabeeinheit zur Ausgabe von graphischen und/oder alphanumerischen Informationen angeordnet ist. Dies ermöglicht die Anzeige bzw. Ausgabe von relevanten Informationen beispielsweise während der Ausführung einer Lernprogrammierung.

Eine Weiterbildung zeichnet sich dadurch aus, dass der Roboterarm bzw. insbesondere das Armglied A_{N} eine Schnittstelle aufweist, über die als Ausgabeeinheit ein Smartphone anschließbar ist. Diese Schnittstelle kann eine mechanische/elektrische Schnittstelle oder eine Funkschnittstelle (beispielsweise Bluetooth, WLAN etc.).

Eine Weiterbildung zeichnet sich dadurch aus, dass an dem Effektor E oder an einem zwischen der Gelenkverbindung GV_{N+1} und dem Effektor E angeordneten Zwischenstück ZW ein sich senkrecht zur Drehachse D_{N+1} erstreckender, mit einer Hand umgreifbarer Fortsatz F2 ausgebildet ist. Ein derartiger Fortsatz F2 ermöglicht insbesondere eine sensiblere und genauere Führung bzw. Bewegung des Roboterarms. Der Fortsatz F1 und der Fortsatz F2 werden dabei jeweils von einer anderen Hand einer Bedienperson gegriffen bzw. geführt.

Eine Weiterbildung zeichnet sich dadurch aus, dass an dem Zwischenstück ZW ein oder mehrere Eingabeelemente EE_{ZW} in der Reichweite eines Daumens einer den Fortsatz F2 greifenden Hand angeordnet sind. Somit ist es möglich, Eingaben über die Eingabeelemente EE und/oder über die Eingabeelemente EE_{ZW} zu tätigen.

In einer besonders bevorzugten Ausführungsform werden für die eingangs genannten Winkel W1 = 90° und/oder W2 = 90° gewählt.

Ein weiterer Aspekt der Erfindung betrifft einen Roboter mit einem Roboterarm wie vorstehend beschrieben.

Vorteilhaft umfasst der Roboter Sensoren zur Erfassung eines mechanischen Zustandes Z(t) des Roboterarms, eine Einheit zur Erfassung von Eingaben EG(t) über die Eingabeelemente EE und/oder EE_{ZW}, eine Einheit zur Auswertung der Zustände Z(t) und der Eingaben EG(t) zur Ermittlung von Auswertergebnissen AW(t), und eine Speichereinheit zur Speicherung der Auswerteergebnisse AW(t).

Vorteilhaft sind die Auswertergebnisse AW(t) Steueranweisungen zur Ansteuerung des Roboterarms. Der vorgeschlagene Roboter ermöglicht somit die Erfassung von Zuständen Z(t) des Roboterarms, die insbesondere durch die mechanische Führung eines Bedieners erzeugt werden, die Erfassung von Eingaben des Bedienung über die Eingabeelemente EE und/oder EE_{ZW}, die Auswertung der erfassten Zustände Z(t) und Eingaben und deren Umsetzung in Auswerteergebnisse AW(t), die insbesondere Steueranweisungen darstellen, um die eingegebenen Bewegungen des Roboterarms auszuführen.

Unter dem mechanischen Zustand Z(t) wird vorliegend vorteilhaft die Positionierung des Roboterarms, zeitliche Ableitung/en der Positionierung des Roboterarms und/oder auftretende und einwirkende Kräfte und Momente auf den Roboterarm verstanden. Natürlich kann der Zustand Z(t) weitere zeitabhängige Zustandsparameter je nach Aufgabenstellung und Anforderung umfassen. Die Einheit zur Erfassung der Eingaben EG(t) umfasst vorteilhaft die Eingabeelemente EE und/oder EE_{ZW} sowie eine mit den Eingabeelementen verbundene Prozessoreinheit PE1. Die Einheit zur Auswertung der Zustände Z(t) ist vorteilhaft ein Computer bzw. eine Prozessoreinheit PE2, durch den/die ein entsprechendes Auswerteprogramm ausgeführt wird. Vorteilhaft sind die Prozessoreinheiten PE1 und PE2 identisch.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Es zeigt:

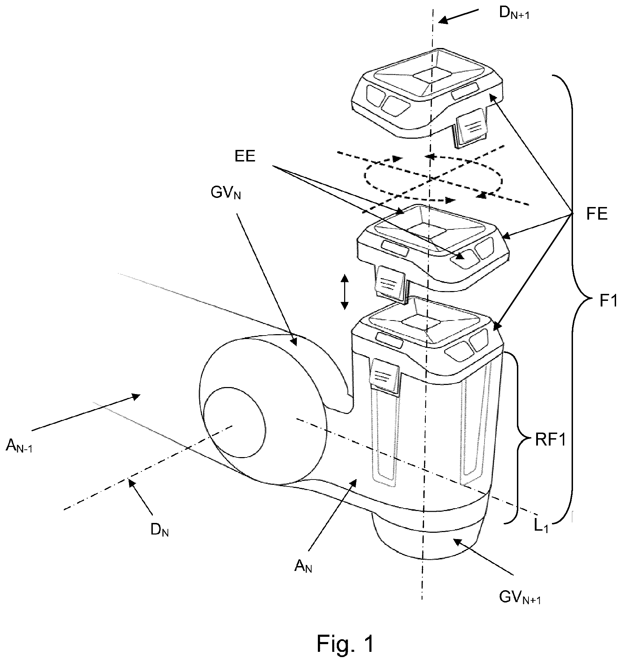

- Fig. 1: eine schematisierte Teildarstellung eines Ausführungsbeispiels des vorgeschlagenen Roboterarms.

Fig. 1 zeigt eine schematisierte Darstellung eines Ausführungsbeispiels des vorgeschlagenen Roboterarms. Der in Teilen dargestellte Roboterarm weist eine Anzahl N von Armgliedern Aₙ auf, die über eine Anzahl N aktorisch antreibbare Gelenkverbindungen GVₙ mit einem Roboterkörper verbindbar sind, mit n= 1, 2, ..., N. In Fig. 1 ist lediglich das Armglied A_{N-1} und A_{N} dargestellt. Der in Teilen dargestellte Roboterarm zeichnet sich dadurch aus, dass das distale Armglied A_{N} des Roboterarms an seinem proximalen Ende über die Gelenkverbindung GV_{N} mit dem Armglied A_{N-1} verbunden ist, das proximale Armglieds A₁ an seinem proximalen Ende über die Gelenkverbindung GV₁ mit dem Roboterkörper (nicht dargestellt) verbindbar ist, die Gelenkverbindung GV_{N} eine Drehung des Armglied A_{N} um eine Drehachse D_{N} ermöglicht, das Armglied A_{N} des Roboterarms sich entlang einer Achse L1 erstreckt und die Achse L1 mit der Drehachse D_{N} einen Winkel von 90° einschließt, das distale Ende des Armglieds A_{N} über eine aktorisch antreibbare Gelenkverbindung GV_{N+1} mit einem Effektor E (nicht dargestellt) verbindbar ist, wobei die Gelenkverbindung GV_{N+1} eine Drehung des Effektors E um eine Drehachse D_{N+1} ermöglicht, wobei die Drehachsen D_{N} und D_{N+1} einen Winkel W1 im Bereich von 90° einschließen, und wobei die Drehachse D_{N+1} und die Achse L1 einen Winkel W2 von 90° einschließen.

Der in Teilen dargestellte Roboterarm zeichnet sich weiterhin dadurch aus, dass das Armglied A_{N} einen mit dem Armglied A_{N} starr verbundenen griffartigen Fortsatz F1 aufweist, der sich konzentrisch zur Drehachse D_{N+1} erstreckt, wobei ein freies Ende FE des Fortsatzes F1 gegenüber dem Rest RF1 des Fortsatzes F1 um die Drehachse D_{N+1} rotierbar anordenbar ist, und das freie Ende FE Eingabeelemente EE zur manuellen Eingabe von Daten aufweist.

Das freie Ende FE kann vorliegend mittels zweier Clips an dem Rest RF1 des Fortsatzes F1 lösbar in insgesamt vier unterschiedlichen Ausrichtungen fixiert werden, die sich jeweils um einen Winkel von 90° unterscheiden. Der Fortsatz F1 weist vorliegend einen annähernd quadratischen Querschnitt mit abgerundeten Ecken auf.

Auf der Oberseite des freien, lösbaren Endes FE sind vier axial angeordnete Eingabeelemente EE, ein zentral axial angeordnete Eingabeelement EE, sowie auf abgeschrägten Flächen insgesamt drei weitere Eingabeelemente EE dargestellt.

Die elektrische Übertragung von Signalen der Eingabeelemente EE zwischen dem lösbaren Ende FE und dem Rest RF1 des Fortsatzes F1 erfolgt vorteilhaft drahtgebunden, oder mittels einer Schleifringübertragung, oder mittels einer Funkübertragung.

Vorteilhaft umfassen die Eingabeelemente EE zumindest teilweise Leuchtelemente mittels denen beispielsweise ein aktueller Eingabestatus ausgegeben werden kann und/oder die zur Kenntlichmachung aktuell aktiver Eingabeelemente EE dienen, und/oder die einfach zur Beleuchtung der Eingabeelemente EE dienen. Weiterhin vorteilhaft weist der Roboterarm eine akustische und/oder optische Ausgabeeinheit auf, über die ein in Zusammenhang mit einer Bedienung eines Eingabeelements EE erzeugter Status akustisch und oder optisch ausgebbar ist. So kann über die Ausgabeeinheit ein Roboterstatus oder Fehlermeldungen ausgegeben werden.

Durch die flexible Anordnung des lösbaren freien Endes FE ist eine für den Bedienter passende Ausrichtung möglich, um Eingaben aus verschiedenen Blickwinkeln und Greifrichtungen zu ermöglichen.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

## Patentansprüche

1. Roboterarm mit einer Anzahl N von Armgliedern Aₙ die über eine Anzahl N aktorisch antreibbare Gelenkverbindungen GVₙ mit einem Roboterkörper verbindbar sind, mit n= 1, 2, ..., N; wobei
- das distale Armglied A_{N} des Roboterarms an seinem proximalen Ende über die Gelenkverbindung GV_{N} mit dem Armglied A_{N-1} verbunden ist,
- das proximale Armglied A₁ an seinem proximalen Ende über die Gelenkverbindung GV₁ mit dem Roboterkörper verbindbar ist,
- die Gelenkverbindung GV_{N} eine Drehung des Armglieds A_{N} um eine Drehachse D_{N} ermöglicht,
- das Armglied A_{N} des Roboterarms sich entlang einer Achse L1 erstreckt und die Achse L1 mit der Drehachse D_{N} einen Winkel von 50 bis 130° einschließt,
- das distale Ende des Armglieds A_{N} W über eine aktorisch antreibbare Gelenkverbindung GV_{N+1} mit einem Effektor E tEt verbindbar ist, wobei die Gelenkverbindung GV_{N+1} eine Drehung des Effektors E um eine Drehachse D_{N+1} ermöglicht, wobei die Drehachsen D_{N} und D_{N+1} einen Winkel W1 im Bereich von 50 bis 130° einschließen und die Drehachse D_{N+1} und die Achse L1 einen Winkel W2 im Bereich von 50 bis 130° einschließen,
**dadurch gekennzeichnet, dass**
- das Armglied A_{N} einen damit starr verbundenen griffartigen Fortsatz F1 aufweist, der sich konzentrisch zur Drehachse D_{N+1} erstreckt,
- ein freies Ende FE des Forsatzes F1 mit einem Rest RF1 des Fortsatzes F1 um die Drehachse D_{N+1} rotierbar fest verbunden ist oder das freie Ende FE des Fortsatzes F1 mit dem Rest RF1 des Fortsatzes F1 in verschiedenen Ausrichtungen um die Drehachse D_{N+1} lösbar fest verbindbar ist, und
- das freie Ende FE Eingabeelemente EE, zur manuellen Eingabe von Daten aufweist.

2. Roboterarm nach Anspruch 1, **dadurch gekennzeichnet, dass** die Eingabeelemente EE auf einer Fläche angeordnet sind, die gegenüber einer Fläche senkrecht zur Drehachse D_{N+1} in einem Winkel von 5 bis 60° geneigt ist.

3. Roboterarm nach einem der Ansprüche 1 oder 2,
**dadurch gekennzeichnet, dass** zwischen dem freien Ende FE und dem Rest RF1 des Fortsatzes F1 eine mechanische und/oder elektrische und/oder eine magnetische Rastervorrichtung vorhanden ist, die ein Rotieren des freien Endes FE mit einer vorgegebenen Rasterung um die Drehachse D_{N+1} erlaubt.

4. Roboterarm nach einem der Ansprüche 1 bis 3,
**dadurch gekennzeichnet, dass** an dem Effektor E oder an einem zwischen der Gelenkverbindung GV_{N+1} und dem Effektor E angeordneten Zwischenstück ZW ein sich senkrecht zur Drehachse D_{N+1} erstreckender, mit einer Hand umgreifbarer Fortsatz F2 ausgebildet ist.

5. Roboterarm nach Anspruch 4,
**dadurch gekennzeichnet, dass** an dem Zwischenstück ZW ein oder mehrere Eingabeelemente EE_{ZW} in der Reichweite eines Daumens der Hand angeordnet sind.

6. Roboter mit einem Roboterarm nach einem der Ansprüche 1 bis 5.

7. Roboter nach Anspruch 6, mit
- Sensoren zur Erfassung eines mechanischen Zustandes Z(t) des Roboterarms,
- einer Einheit zur Erfassung von Eingaben EG(t) über die Eingabeelemente,
- einer Einheit zur Auswertung der Zustände Z(t) und der Eingaben EG(t) zur Ermittlung von Auswertergebnissen AW(t), und
- eine Speichereinheit zur Speicherung der Auswerteergebnisse AW(t).

8. Roboter nach Anspruch 7,
bei dem die Auswertergebnisse AW(t) Steueranweisungen zur Ansteuerung des Roboterarms oder Steueranweisungen zur Änderung eines Steuerprogramms des Roboters und/oder von dessen Parametern sind.

## Claims

1. Robot arm having a number N of arm members Aₙ, which are connected to a robot body via a number N of actuator-driven articulated connections GVₙ, where n= 1, 2, ..., N; wherein
- the distal arm member A_{N} of the robot arm is connected to the arm member A_{N-1} at its proximal end via the articulated connection GV_{N},
- the proximal arm member A₁ can be connected to the robot body at its proximal end via the articulated connection GV₁,
- the articulated connection GV_{N} enables the arm member A_{N} to rotate about an axis of rotation D_{N},
- the arm member A_{N} of the robot arm extends along an axis L1 and the axis L1 forms an angle of 50 to 130° with the axis of rotation D_{N},
- the distal end of the arm member A_{N} can be connected to an effector E via an actuator-driven articulated connection GV_{N+1}, wherein the articulated connection GV_{N+1} enables the effector E to rotate about an axis of rotation D_{N+1}, wherein the axes of rotation D_{N} and D_{N+1} form an angle W1 in the range of 50 to 130° and the axis of rotation D_{N+1} and the axis L1 form an angle W2 in the range of 50 to 130°,
**characterized in that**
- the arm member A_{N} has a handle-like extension F1 rigidly connected thereto, which extends concentrically to the axis of rotation D_{N+1},
- a free end FE of the extension F1 is fixedly connected to a remainder RF1 of the extension F1 so that it can rotate about the axis of rotation D_{N+1} or the free end FE of the extension F1 can be releasably fixedly connected to the remainder RF1 of the extension F1 in different orientations about the axis of rotation D_{N+1}, and
- the free end FE has input elements EE for manually inputting data.

2. Robot arm according to Claim 1, **characterized in that** the input elements EE are arranged on a surface, which is inclined at an angle of 5 to 60° to a surface perpendicular to the axis of rotation D_{N+1}.

3. Robot arm according to either one of Claims 1 or 2, **characterized in that** between the free end FE and the rest RF1 of the extension F1 there is a mechanical and/or electrical and/or magnetic indexing device, which allows the free end FE to rotate with a predetermined indexing about the axis of rotation D_{N+1}.

4. Robot arm according to one of Claims 1 to 3, **characterized in that** an extension F2 extending perpendicular to the axis of rotation D_{N+1} and which can be grasped with one hand is formed on the effector E or on an intermediate piece ZW arranged between the articulated connection GV_{N+1} and the effector E.

5. Robot arm according to Claim 4, **characterized in that** on the intermediate piece ZW, one or more input elements EE_{ZW} are arranged within reach of a thumb of the hand.

6. Robot having a robot arm according to one of Claims 1 to 5.

7. Robot according to Claim 6, having
- sensors for detecting a mechanical state Z(t) of the robot arm,
- a unit for recording inputs EG(t) via the input elements,
- a unit for evaluating the states Z(t) and the inputs EG(t) for determining evaluation results AW(t), and
- a storage unit for storing the evaluation results AW(t).

8. Robot according to Claim 7, in which the evaluation results AW(t) are control instructions for controlling the robot arm or control instructions for changing a control program of the robot and/or its parameters.

## Revendications

1. Bras de robot, comprenant un nombre N d'éléments de bras Aₙ qui sont susceptibles d'être reliés par un nombre N de liaisons articulées GVₙ entraînables par actionneurs avec un corps de robot, avec n = 1, 2, ..., N ;
- sur son extrémité proximale, l'élément de bras A_{N} distal du bras de robot étant susceptible d'être relié par l'intermédiaire de la liaison articulée GV_{N} avec l'élément de bras A_{N-1},
- sur son extrémité proximale, l'élément de bras proximal A₁ étant susceptible d'être relié par l'intermédiaire de la liaison articulée GV₁ avec le corps de robot,
- la liaison articulée GV_{N} permettant une rotation de l'élément de bras A_{N} autour d'un axe de rotation D_{N},
- l'élément de bras A_{N} du bras de robot s'étendant le long d'un axe L1 et l'axe L1 incluant avec l'axe de rotation D_{N} un angle de 50 à 130° t,
- l'extrémité distale de l'élément de bras A_{N} étant susceptible d'être reliée par l'intermédiaire d'une liaison articulée GV_{N+1} entraînable par actionneur avec un positionneur E, la liaison articulée GV_{N+1} permettant une rotation du positionneur E autour d'un axe de rotation D_{N+1}. les axes de rotation D_{N} et D_{N+1} incluant un angle W1 de l'ordre de 50 à 130_{°} et l'axe de rotation D_{N+1} et l'axe L1 incluant un angle W2 de l'ordre de 50 à 130°.
**caractérisé**
- **en ce que** l'élément de bras A_{N} comporte un prolongement F1 de type poignée, relié de manière rigide avec celui-ci, qui s'étend de manière concentrique par rapport à l'axe de rotation D_{N+1},
- **en ce qu'**une extrémité FE libre du prolongement F1 est reliée avec un reste RF1 d prolongement F1 en étant rotative autour de l'axe de rotation D_{N+1} ou en ce que l'extrémité FE libre du prolongement F1 est susceptible d'être reliée fixement de manière amovible avec le reste RF1 du prolongement F1 dans différentes orientations autour de l'axe de rotation D_{N+1} et
- l'extrémité libre FE comporte des éléments de saisie EE, pour la saisie manuelle de données.

2. Bras de robot selon la revendication 1,
**caractérisé en ce que** les éléments de saisie EE sont placés sur une surface, qui par rapport à une surface perpendiculaire à l'axe de rotation D_{N+1} est inclinée sous un angle de 5 à 60°.

3. Bras de robot selon l'une quelconque des revendications 1 ou 2, **caractérisé en ce qu'**entre l'extrémité FE et le reste RF1 du prolongement F1 est présent un dispositif d'enclenchement mécanique et / ou électrique et / ou magnétique, qui admet une rotation de l'extrémité FE libre avec un crantage prédéfini autour de l'axe de rotation D_{N+1}.

4. Bras de robot selon l'une quelconque des revendications 1 à 3, **caractérisé en ce que** sur le positionneur ou sur une pièce intermédiaire ZW placée entre la liaison articulée GV_{N+1} et le positionneur est constitué un prolongement F2 s'étendant à la perpendiculaire de l'axe de rotation D_{N+1}, susceptible d'être entouré par une main.

5. Bras de robot selon la revendication 4, **caractérisé en ce que** sur la pièce intermédiaire, un ou plusieurs éléments de saisie EE_{ZW} sont placés dans la portée d'un pouce de la main.

6. Robot, comprenant un bras de robot selon l'une quelconque des revendications 1 à 5.

7. Robot selon la revendication 6, comprenant
- des capteurs, destinés à détecter un état Z(t) mécanique du bras de robot,
- une unité, destinée à détecter des saisies EG(t) par l'intermédiaire des éléments de saisie,
- une unité, destinée à évaluer les états Z(t) et les saisies EG(t), pour déterminer des résultats AW(t) d'évaluation, et
- une unité de mémoire, destinée à mémoriser les résultats AW(t) d'évaluation.

8. Robot selon la revendication 7, sur lequel les résultats AW(t) d'évaluation sont des instructions de commande pour l'actionnement du bras de robot ou des instructions de commande pour la modification d'un programme de commande du robot et / ou de ses paramètres.
